# NEW EUROPEAN PATENT SPECIFICATION

(11) **EP 0 173 684 B2**
(45) Date of publication and mention of the opposition decision: **12.06.1996**
(45) Mention of the grant of the patent: 07.02.1990
(21) Application number: 84901497.2
(22) Date of filing: 08.03.1984
(51) Int. Cl.: F16J 15/44

(54) **SEGMENTED LABYRINTH-TYPE SHAFT SEALING SYSTEM FOR FLUID TURBINES**
MIT ABDICHTSEGMENTEN VERSEHENE LABYRINTHDICHTUNG FÜR HYDRAULISCHE STRÖMUNGSMASCHINEN
SYSTEME D'ETANCHEITE D'ARBRES DE TYPE A LABYRINTHE SEGMENTE POUR TURBINES HYDRAULIQUES

(43) Date of publication of application: 12.03.1986
(73) Proprietor: BRANDON, Ronald E., Schenectady, NY 12308 (US)
(72) Inventor: BRANDON, Ronald E., Schenectady, NY 12308 (US)
(74) Representative: Tregear, George Herbert Benjamin
(86) International application number: US8400375
(87) International publication number: WO8503991

(56) References cited:
- CH-A- 387 069
- DE-B- 1 187 874
- DE-C- 2 513 582
- FR-A- 763 708
- FR-A- 1 274 297
- FR-A- 1 338 213
- FR-B- 28 259
- GB-A- 1 224 234
- SE-C- 128 449
- US-A- 967 247
- US-A- 2 239 637
- US-A- 2 600 991
- US-A- 3 594 010

## Description

The present invention relates to elastic fluid turbines, and more particularly to seal ring systems which minimise fluid leakage between rotating and stationary parts.

This invention relates to seals for elastic fluid axial flow turbines. Such seals are arranged both where rotatable shafts penetrate stationary turbine casings and, in addition, internal to the casings between stages and turbine sections. The seals prevent or reduce leakage of the fluid by creating small clearance areas with low flow coefficients between the rotating and stationary parts. Improved efficiency, minimised loss of fluid, and prevention of undesirable side effects caused by leakage of fluid are all planned benefits of such seals.

The seals are vulnerable to rubbing damage caused by turbine misalignment, vibration and thermaldistortion. Most of these damage causing factors are more likely to occur during starting, at light loads or following sudden loss of load. As a result, it would be desirable to create a condition of relatively large clearance during these conditions, to minimise possible damage to the seals, yet still accomplish a small clearance condition at higher loads. The higher load condition corresponds to operation when efficiency is of highest value and where turbine operation is stable relative to most of the factors which can cause damage to seals.

Various turbine designs have been attempted in order to minimise turbine leakage for example as shown in US Patent 967247, French Patent 1338213 and Swiss Patent 387069. The seals are made of materials specially selected to minimise damage caused by rubbing. The seal geometry is designed with thin teeth to require the least amount of heat and force during rubbing situations. The seal rings are usually spring-backed and allow rubbing forces to shift the rings to minimise rubbing forces and damage. The springs are arranged to push the seal rings toward the shaft, but not beyond a limiting position defined by shoulders located on the stationary parts.

British Patent 1224234 discloses an elastic fluid turbine employing seals to minimise leakage between rotating and stationary components comprising a segmented seal ring supported by and at least partially contained in an annular groove formed in a stationary casing to permit motion of said seal ring between a large diameter position and a small diameter position corresponding respectively to large and small clearance of said seal ring with regard to the rotating shaft, said seal ring groove being partially defined by annular abutment means at an annular opening of said groove opening radially into the clearance area between said casing and said rotating shaft; each segment of said seal ring including an inner arcuate portion having seal teeth extending therefrom in the direction of and adjacent to said rotating shaft, a radially outwardly facing arcuate surface on said seal ring segment which is located opposite to a radially inwardly facing arcuate surface of said casing and an outer ring portion disposed within said seal ring groove for both axial and radial movement therein and having shoulder means for making radial contact with said annular abutment means on said casing and thereby limiting said small clearance position, and a radial positioning means comprising a compressed spring means biased against said ring segments to urge said segments toward said large clearance position, while working fluid which is freely admitted to the annular space between said casing and said ring segments will urge said segments toward said small clearance position, whereby at low speed and small turbine loads the spring forces will predominate, while at high flows and high working fluid pressure the pressure forces will predominate. The seal according to GB-A-1224234 depends on a non-symmetrical geometry which he assumed to produce zero or minimum side thrust force and, consequently, minimum friction which would act against radial movement of the sealing ring. It is widely recognised however that significant side thrust forces are unavoidable in the majority of large scale steam turbine applications. The seal disclosed in British Patent 1224234 would be impractical in such steam turbine applications. Furthermore, the non-symmetrical geometry shown in British Patent 1224234 results in a significant reduction in the number of sealing teeth that can be provided in a given available sealing space and, consequently, a greater leakage and poorer efficiency.

CH-A-387069, on which the preamble of claim 1 is based, teaches an elastic fluid turbine employing seals to minimize leakage between rotating and stationary components, comprising
a segmented seal ring supported by and at least partially contained in an annular groove formed in a stationary casing to permit motion of said seal ring between a large diameter position and a small diameter position corresponding respectively to large and small clearance of said seal ring with regard to the rotating shaft, said seal ring groove being partially defined by annular abutment means at an annular opening of said groove opening radially into the clearance area between said casing and said rotating shaft;
each segment of said seal ring including an inner arcuate portion having seal teeth extending therefrom in the direction of and adjacent to said rotating shaft, a radially outwardly facing arcuate surface on said seal ring segment which is located opposite to a radially inwardly facing arcuate surface of said casing, and an outer ring portion disposed within said seal ring groove for both axial and radial movement therein and having shoulder means for making radial contact with said annular abutment means on said casing and thereby limiting said small clearance position, and
a radial positioning means comprising spring means biased against said ring segments to urge said segments toward said large clearance position, while working fluid which is freely admitted to the annular space between said casing and said ring segments will urge said segments toward said small clearance position, whereby at low speed and small turbine loads the spring forces will predominate, while at high flows and high working fluid pressure the pressure forces will predominate wherein,
   (a) the outer ring portion of each segment has a pair of annular shoulders extending to either side to provide said shoulder means
   (b) the casing has a pair of annular shoulders defining said annular opening to said annular groove and providing said abutment means, each shoulder on the outer ring portion contacting the respective annular shoulder on the casing in the small clearance position of the seal ring,
   (c) contact between the outwardly facing arcuate surface of the seal ring with the inwardly facing surface of the casing defines the large clearance position of the seal ring,
   (d) the seal ring has a neck portion extending outwardly from the inner arcuate portion and extending with clearance through the annular entrance to the annular groove, and
   (e) one side of the neck portion of the seal ring is adapted to contact an annular radial surface on one of the annular shoulders of the casing to provide a contact pressure seal at the side which is at lower turbine pressure.

DE-B-1187874 describes an invention which pertains to a floating seal bearing for turbine shafts, made of radially movable segments, in which helical springs are positioned between the faces of neighbouring segments. It is explained that in shaft seals with automatic sealing gap adjustment it is important to reduce or eliminate friction in the guides in the housing from movement of the segments, in order to ensure a definite relationship between the housing from movement of the segments, in pressure and movement. This can be achieved by holding the segments tangentially fixed with removable leaf springs which are attached to the outside of the segments and to the inside of the housing. In internal turbine shaft seals whose segments serve as the stationary vanes of a stage, these leaf springs also serve to transfer the reaction moment on the stator to the housing. As the prevention of contact between the shaft and outer ring in shaft seals with automatic sealing gap adjustment is more important than the prevention of slight losses due to poor sealing, especially in the case of low turbine loads, it is convenient to prestress the leaf springs with a radially outward force. Such a prestressing serves to support the movement of the segments from a narrow to wide sealing gap.

The elastic fluid turbine of the present invention has the above-mentioned features of the turbine of CH-A-387069 and is characterized as set forth in Claim 1.

These shaft sealing features are applicable for use with existing turbine designs having seal rings with large axial side forces causing friction. No sacrifice is required in the number of packing teeth that can be accommodated. Seal damage and consequent loss of efficiency and maintenance cost are reduced.

Other features and advantages will appear from the following.

One embodiment of the invention will now be described by way of example with reference to the accompanying drawings in which:
Figure 1 is a horizontal elevation drawing, partially in section, of a multistage axial flow elastic turbine showing a portion of one stage with a shaft seal ring;
Figure 2 is cross-section view taken along lines 2-2 of Figure 1; and
Figure 3 is an isometric view of a portion of the seal ring.

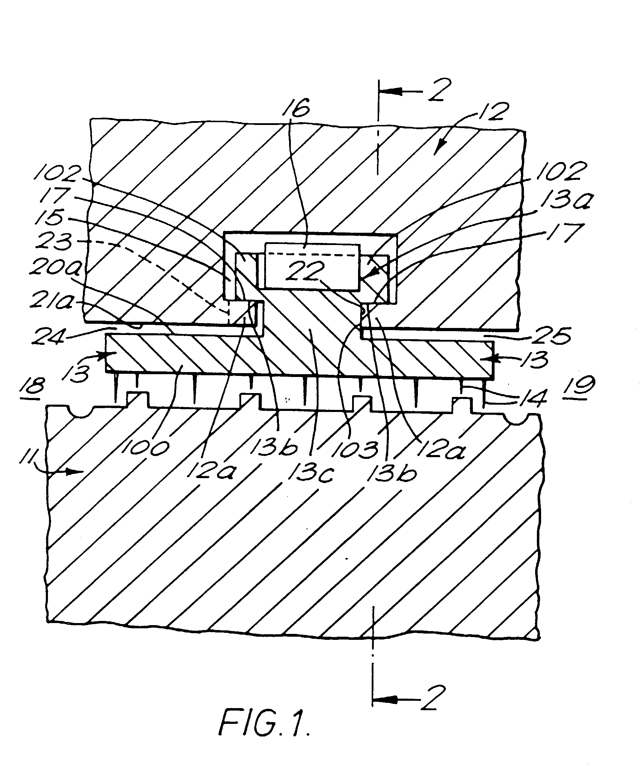

Referring to Figure 1, the turbine includes a rotor, a portion of which is shown at 11, and a casing, a portion of which is shown at 12. With regard to interstage seals, it should be noted that part 12, the casing, could instead be called a diaphragm. Only one seal ring 13 is illustrated, although several such rings could be arranged in series. It will be understood by those skilled in the art that the remainder of the turbine necessarily includes means for introducing steam at high pressure and exhausting it at lower pressure, with nozzles, buckets, wheels and other components which do not need inclusion here to explain the seal function which is effected by the invention. The seal ring shown and described herein is intended to be exemplary of many found through out the turbine.

The seal ring 13 includes a plurality of teeth 14 that are disposed in opposition to circumferential portions of the shaft which are alternately stepped up and down in radius. With high pressure fluid at 18 and low pressure at 19 there will be a positive force to cause fluid leakage between the multiple restrictions formed by the small openings between the teeth 14 and the shaft 11. The combination of the clearance area, the relative sharpness of the teeth, the number of the restrictions, the fluid conditions including pressure and density, and the geometry of the leakage path determine the amount of leakage flow according to formulae and empirical constants which are well known. Many alternative geometrical arrangements can be used to provide multiple or single leakage.

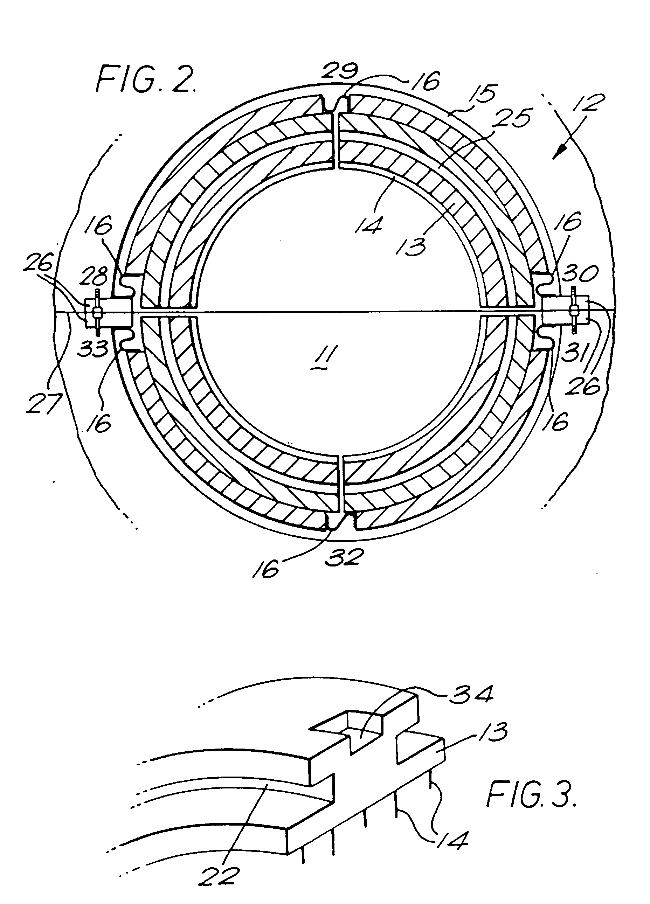

The seal ring is retained in groove 15 of the casing 12. As shown in Figure 2, the seal ring is comprised of four or more segments each disposed within the groove 15 to accommodate assembly or disassembly of the casing by locating the seal ring sections to separate at the joint 27 of the casing. Springs 16, are located at each end of each seal ring segment in a compressed condition. Positive circumferential location and retainment of the seal ring segments and springs 16 are assured by locking pieces 26 which are provided above and below casing joints 27.

It is to be understood that while the words "seal ring 13" are used herein, they may apply to an individual seal ring segment and, therefore, should be read in context.

Each segment of the seal ring 13 is shown including the inner ring portion 100, having the seal teeth 14 extending from its radially inward surface while its radially outward surface 20a limits the large clearance position by means of its contact with the radial surface 21a of the casing 12. The seal ring 13 also includes an outer ring portion 13a disposed within the casing groove 15 with a pair of annular shoulders 102 extending to either side of each defining an inner circumferential surface 13b which, as described below, limits the small clearance position of the seal ring segments by restraining their radial inward movement by contact of surface 13b with surface 17 on the shoulder 12a of casing 12. The seal ring 13 shown in Figure 1 also includes a neck portion 13c between said inner ring section and said outer ring section into which the shoulder 12a of the casing interlock to axially locate the ring segment. As described below, seal ring neck portion 13c provides a contact surface which, as shown at 22, is in direct contact with the radial surface 103 of the casing shoulder 12a.

At low or no load conditions, only the weight of the seal ring segments, the confining limited of the casing, and the force of the springs 16 act on the seal rings. The springs are selected with sufficient strength and dimension under these conditions to cause the seal ring segments to separate at each segment joint. This causes the seal ring to seek larger diameters but limited to that available within the annular space 24 and 25. When this space is decreased to permit contact between surfaces 20a and 21a, no further enlargement can occur. The annular space is sized to allow, by the radially outward movement of the ring segments, sufficient space to accommodate the worst expected transient misalignment of rotor and casing without damage to the seal ring teeth 14.

After the turbine has been accelerated to the operating speed and partially loaded, the worst of thermal gradients, vibration and misalignment problems are normally ended. As load is increased, the fluid pressure increases proportionately around the rings in such fashion, as discussed later, to cause the springs to be compressed and the seal ring segments to move radially inward until restrained by contact at surface 17. The dimensions of the seal ring and surface 17 on the casing are selected to create the smallest clearance between the teeth 14 and the rotor surface determined to be practical for loaded, relatively steady state operation.

The seal ring 13 is shown in its high load, small clearance condition. The higher pressure side of the seal is identified at 18. This pressure persists in the annular spaces 24 and 15 as a result of an open communication created by one or more openings 23 indicated in brokenline. The openings 23 may, for example, be made by local cutouts in the high pressure side of shoulder 12a. The low pressure condition 19 persists also in the annular space 25.

It can be easily recognised that the resultant axial force of these pressure will cause the seal ring to be pushed toward the low pressure area 19 so as to create a leak resistant seal at location 22 between the seal ring 13 and the casing 12. For a geometry of known dimensions and pressures, the magnitude of this axial force can eaily be calculated. The axial forces may be large. The radial force at 16 must be large enough to overcome metal to metal friction in order to move the seal ring in a radial direction.

In a similar fashion, but somewhat more complicated, the radial forces can also be determined. With the exception of the pressure distribution along the seal ring inner surface (that facing the rotor), all other pressures were identified in the two paragraphs above. There will be a pressure drop across each tooth of the seal. Using the known condition of flow continuity through each tooth, with constant enthalpy expansions, a relatively accurate distribution of pressure can be calculated using a trial and error process for the series of constant area throttlings. On some packing rings, a high mach number will exist to complicate the calculation, but this will be known and accounted for by those skilled in the art.

The radial pressure distribution is used to select the dimensions of the seal ring to achieve an appropriate resultant inward force on the seal ring. The design goal is to establish, for the seal ring a force condition that will cause the ring to overcome its weight, spring and friction forces so as to shift it to its inward or small clearance position for the pressure conditions which can be predicted to exist when the turbine it operating at a small but significant load, such as 10% to 35%.

For turbine locations with relatively small pressure differentials it will be recognised quickly by those familiar with the art that the seal rings should be made lighter in weight and employ springs with weaker spring constants. It should be especially noted that the geometry of the seal rings can be altered to adjust the magnitude of the resultant inward force caused by pressure. That can be done by changing the portion of the outer periphery of the seal ring that is exposed to the high pressure.

As will be recognized by those familiar with elastic fluid turbines, the internal pressure at most locations throughout the turbine is approximately proportional to load. As load and mass flow is increased, local pressures increase in approximately linear fashion. Under these circumstances, the pressure drop across turbine stages and most turbine seal rings also increase in a predictable and linear fashion with increasing load and fluid flow. It is this relationship that can allow a designer to select a condition of load and pressure for each seal ring where the pressure forces can be expected to overcome the combination of spring force, weight, and friction so as to move the seal ring to its small clearance condition.

As discussed above, the designer can partially control this circumstance by varying the dimensions, weight and spring constants employed within the seal ring.

A considerable variety of springs 16 can be employed. They must be selected to have long life and stable characteristics while exposed to high temperature, vibration and possible corrosive conditions. S-shaped springs are illustrated, but others can be employed, such as flat springs or coil-type springs.

It will be noted that the springs see different requirements depending on circumferential posy tion. In Figure 2, it can be noted that for the four segment seal ring illustrated, there are six springs required, one each at locations 28, 29, 30, 31, 32 and 33.

Locations 28 and 30 require a spring that must be capable of pushing the segment to its maximum radial position while supporting the weight of the seal ring segment and resisting a selectee magnitude of pressure forces.

Locations 31 and 33 have no weight to support They must be designed to resist a selected amount of force caused by the pressure distribution on one segment less the small downward weight component which tends to open the clearance at these locations.

Location 29 must have a spring designed to resist the selected pressure distribution force from the two opposed ring segments in addition to the small weight-caused component of force which tends to decrease radial clearance at that location.

Location 32 must be designed to resist the selected level of pressure distribution forces on the two opposing segments less the downward component of force caused by the weight of the segments which tend to cause a large clearance condition.

The springs should be physically sized and contained by surrounding parts to make escape difficult, even if broken. Referring to Figure 3 it is noted that a pocket 34 for the springs can be obtained by removing a portion of the outermost periphery of either or both of the adjacent seal rings. The removal must not interfere with the seal surface 22. Greater assurance of correct positioning and containment of a spring can be obtained by attaching it to the pocket 34 of the seal ring, in a proper position to be in proper alignment with the adjacent seal ring or the locking piece 26.

It might be noted that one spring at each horizontal joint could be considered instead of the two that are illustrated. This complicates assembly and may reduce the ability to contain the springs during operation. It may further restrict the ability to determine what reasonable accuracy under what condition the seal rings will shift position, since a common spring cannot simultaneously accomplish the somewhat different spring force needs that would be ideal for the segments above and below the horizontal joint. Of course, it is not essential that all segments simultaneously shift position at the same flow condition.

The gap between seal ring segments must be carefully selected. This choice is made to properly reflect thermal expansion of the seal ring relative to that of the casing or diaphragm in which it is held. Both temperature and thermal coefficient of expansion must be considered for each component.

## Claims

1. An elastic fluid turbine employing seals to minimize leakage between rotating and stationary components, comprising
a segmented seal ring (13) supported by and at least partially contained in an annular groove (15) formed in a stationary casing (12) to permit motion of said seal ring between a large diameter position and a small diameter position corresponding respectively to large and small clearance of said seal ring with regard to the rotating shaft (11), said seal ring groove being partially defined by annular abutment means (17) at an annular opening of said groove opening radially into the clearance area between said casing and said rotating shaft;
each segment of said seal ring (13) including an inner arcuate portion (100) having seal teeth (14) extending therefrom in the direction of and adjacent to said rotating shaft (11), a radially outwardly facing arcuate surface (20a) on said seal ring segment which is located opposite to a radially inwardly facing arcuate surface (21a) of said casing, and an outer ring portion (13a) disposed within said seal ring groove (15) for both axial and radial movement therein and having shoulder means (10) for making radial contact with said annular abutment means (17) on said casing and thereby limiting said small clearance position, and
a radial positioning means comprising a compressed spring means (16) biased against said ring segments (13) to urge said segments toward said large clearance position, while working fluid which is freely admitted to the annular space between said casing and said ring segments willurge said segments toward said small clearance position, whereby at low speed and small turbine loads the spring forces will predominate, while at high flows and high working fluid pressure the pressure forces will predominate, wherein
a) the outer ring portion (13a) of each segment has a pair of annular shoulders (102) extending to either side to provide said shoulder means
b) the casing has a pair of annular shoulders (12a) defining said annular opening to said annular groove (15) and providing said abutment means, each shoulder on the outer ring portion contacting the respective annular shoulder on the casing in the small clearance position of the seal ring,
c) contact between the outwardly facing arcuate surface (20a) of the seal ring (13) with the inwardly facing surface (21a) of the casing defines the large clearance position of the seal ring,
d) the seal ring (13) has a neck portion (13c) extending outwardly from the inner arcuate portion (100) and extending with clearance through and the annular entrance to the annular groove (15), and
e) one side of the neck portion (13c) of the seal ring (13) is adapted to contact an annular radial surface (103) on one of the annular a shoulders (12a) of the casing to provide a contact pressure seal at the side which is at lower turbine pressure;
characterized in that said spring means (16) include compressed springs (16) interposed between the ends of said ring segments (13) to urge said segments to said large clearance condition at low speeds and small turbine loads, each of said springs being selected to provide a force depending on its circumferential position in said segment ring;
said segmented seal ring (13) including both upper seal segments located around the upper half of said rotating shaft (11), and lower seal segments located around the lower half of said shaft;
said stationary casing (12) having an upper half and a lower half which are separated at horizontal casing joints (27), said upper seal segments being separated from said lower seal segments at said casing joints (27), locking means (26) which extend out from said casing joints to retain said springs in position between said casing and said ring segments and to provide positive circumferential location and retainment of said seal ring segments and springs;
said springs (16) which are positioned at locations (28, 29, 30) above the horizontal casing joints (27) ("upper springs") providing spring forces between the ends of adjacent segments for pushing upper seal segments to said large clearance position while supporting the weight of the upper seal ring segments and resisting a predetermined magnitude of fluid pressure distribution forces on said upper seal segments at low turbine speeds and small turbine loads;
said upper springs being selected so that the upper ring segments will overcome spring and friction forces such that the ring segments will shift radially inward to their small clearance position for the fluid pressure distribution conditions predicted to exist on said ring segments at higher flows and higher working fluid pressure conditions;
and said springs (16) which are positioned at locations (31, 32, 33) below said horizontal casing joints (27) ("lower springs") providing spring forces for pushing said lower seal segments to said large clearance position while resisting a selected amount of fluid pressure distribution forces on said lower seal segments less the downward weight component of said segments at low turbine speeds and small turbine loads;
said lower springs being selected so that the lower seal segments will overcome their weight and spring and friction forces such that the ring segments will shift radially inward to their small clearance position for the fluid pressure distribution conditions predicted to exist on said ring segments at higher flows and higher pressure conditions.

2. A fluid turbine seal arrangement as in Claim 1, wherein the spring means (16) comprise leaf springs.

3. A fluid turbine seal arrangement as in Claim 1, characterised in that said inner arcuate portion of said seal ring segment comprises an inner ring portion (100) connected at one side to said neck portion (13c) and includes said radially outward facing arcuate surface (20a) for limiting said large clearance position by said contact with said casing surface (21a), said inner ring portion having said seal teeth extending therefrom.

4. A fluid turbine seal arrangement as in Claim 3, characterised in that said inner ring portion extends substantially from said neck portion axially in both directions such that said inner ring portion is substantially wider than said neck portion and has said seal teeth extending therefrom radially into said clearance area.

5. A fluid turbine seal arrangement as in Claim 4, characterised in that said radially outwardly facing arcuate surface in said seal ring segment which is located opposite to a radially inward facing arcuate surface of said casing comprises the radially outward facing surfaces of said inner ring portion.

## Patentansprüche

1. Elastische Flüssigkeitsturbine, bei der zur Minimalisierung von Lecken zwischen sich drehenden und feststehenden Teilen Dichtungen verwendet werden, bestehend aus
einem unterteilten Dichtungsring (13), der von einer Ringnut (15), welche in einem feststehenden Gehäuse (12) eingebracht ist, gehalten wird und zumindest teilweise in ihr enthalten ist, um Bewegung des Dichtungsringes zwischen einer Stellung mit großem Durchmesser und einer Stellung mit kleinem Durchmesser entsprechend jeweils einem großen bzw. kleinen Spielraum des Dichtungsringes in bezug auf die rotierende Welle (11) zu ermöglichen, wobei die Dichtungsringnut teilweise durch ringförmige Begrenzungsmittel (17) an einer ringförmigen Öffnung der Nut bestimmt wird, welche sich radial in den Bereich des Spielraumes zwischen dem Gehäuse und der rotierenden Welle hinein öffnet;
wobei jedes Segment des Dichtungsringes (13) einen inneren gewölbten Abschnitt (100) mit Dichtungszähnen (14) aufweist, welche davon ausgehend in Richtung auf und in der Nähe der rotierenden Welle (11) verlaufen, mit einer radial nach außen gerichteten gewölbten Oberfläche (20a) auf dem Dichtungsringsegment, die gegenüber einer radial nach innen gerichteten gewölbten Oberfläche (21a) des Gehäuses angeordnet ist, sowie einen äußeren Ringabschnitt (13a), der innerhalb der Dichtungsringnut (15) zur sowohl axialen als auch radialen Bewegung darin angeordnet ist und Schultermittel (10) aufweist, welche radial mit den ringförmigen Begrenzungsmitteln (17) auf dem Gehäuse in Berührung stehen und auf diese Weise die Stellung mit kleinem Spielraum begrenzen,
sowie ein radiales Positionierungsmittel mit vorgespannter Federung (16), die auf die Ringsegmente (13) wirkt und sie dadurch in die Stellung mit großem Spielraum drückt, während Arbeitsflüssigkeit, die frei in den ringförmigen Raum zwischen dem Gehäuse und den Ringsegmenten eingelassen wird, diese Ringsegmente wiederum in die Stellung mit kleinem Spielraum bewegt, wodurch bei geringer Geschwindigkeit und unter geringen Turbinenlasten die Federkräfte überwiegen und demgegenüber bei hohen Flußgeschwindigkeiten und hohem Druck der Arbeitsflüssigkeit die Druckkräfte vorherrschen, worin
a) der äußere Ringabschnitt (13a) eines jeden Segmentes mit einem Paar ringförmiger Schultern (102) vesehen ist, die auf jeder Seite verlaufen und so die Schultermittel bilden,
b) das Gehäuse ein Paar ringförmiger Schultern (12a) aufweist, die die ringförmige Öffnung zur ringförmigen Nut (15) bestimmen und die Begrenzungsmittel bilden, wobei in der Stellung des Dichtungsringes mit kleinem Spielraum eine jede Schulter auf dem äußeren Ringabschnitt die entsprechende ringförmige Schulter auf dem Gehäuse berührt,
c) der Kontakt zwischen der nach außen gerichteten gewölbten Oberfläche (20a) des Dichtungsringes (13) und der nach innen gerichteten Oberfläche (21a) des Gehäuses die Stellung mit großem Spielraum des Dichtungsringes bestimmt,
d) der Dichtungsring (13) einen Halsabschnitt (13c) aufweist, der vom inneren gewölbten Abschnitt (100) nach außen verläuft und mit Spielraum durch den ringförmigen Eingang zur ringförmgien Nut (15) verläuft, sowie
e) eine Seite des Halsabschnittes (13c) des Dichtungsringes (13) so ausgeführt ist, daß sie eine ringförmige radiale Oberfläche (103) auf einer der beiden ringförmigen Schultern (12a) des Gehäuses berührt, um eine Berührungsdruckabdichtung auf der Seite verfügbar zu machen, die unter geringerem Turbinendruck steht,
dadurch gekennzeichnet, daß die Federmittel (16) vorgespannte Federn (16) umfassen, die zwischen den Enden der Ringsegmente (13) angeordnet sind, um die Segmente bei geringen Geschwindigkeiten und geringen Turbinenlasten in die Stellung mit großem Spielraum zu drängen, wobei jede der Federn so gewählt ist, daß eine Kraft bereitgestellt wird, die von ihrer Umfangsposition im Segmentring abhängt;
wobei der segmentierte Dichtungsring (13) sowohl obere Dichtungssegmente umfaßt, die um die obere Hälfte der rotierenden Welle (11) herum angeordnet sind, als auch untere Dichtungssegmente, die um die untere Hälfte der Welle herum angeordnet sind;
wobei das stationäre Gehäuse (12) eine obere Hälfte und eine untere Hälfte aufweist, die an horizontalen Gehäusefugen (27) getrennt sind, wobei die oberen Dichtungssegmente von den unteren Dichtungssegmenten an den Gehäusefugen (27) getrennt sind, sowie Sperrmittel (26), die von den Gehäusefugen ausgehend verlaufen, um die Federn zwischen dem Gehäuse und den Ringsegmenten in Position zu halten und für festes Anordnen und Halten der Dichtungsringsegmente und Federn am Umfang zu sorgen;
wobei die Federn (16), die an Stellen (28, 29, 30) über den horizontalen Gehäusefugen (27) angeordnet sind ("obere Federn") Federkräfte zwischen den Enden der benachbarten Segmente liefern, um obere Dichtungssegmente in die Stellung mit großem Spielraum zu drücken, während sie das Gewicht der oberen Dichtungsringsegmente halten und bei geringen Turbinengeschwindigkeiten und geringen Turbinenlasten ein vorbestimmtes Ausmaß an Flüssigkeitsdruckverteilungskräften auf die oberen Dichtungssegmente aushalten;
wobei die oberen Federn so gewählt sind, daß die oberen Ringsegmente Feder- und Reibungskräfte überwinden, sodaß sich die Ringsegmente radial nach innen in ihre Stellung mit kleinem Spielraum verschieben, damit die vorhergesagten Flüssigkeitsdruckverteilungsbedingungen an den Ringsegmenten bei höheren Strömungen und höheren Arbeitsflüssigkeitsdruckbedingungen vorliegen;
und die Federn (16), die an Positionen (31, 32, 33) unter den horizontalen Gehäusefugen (27) angeordnet sind ("untere Federn") Federkräfte bereitstellen, um die unteren Dichtungssegmente in die Stellung mit großem Spielraum zu schieben, während sie bei geringen Turbinengeschwindigkeiten und geringen Turbinenlasten ein ausgewähltes Ausmaß an Flüssigkeitsdruckverteilungskräften auf die unteren Dichtungssegmente minus der abwärtsgerichteten Gewichtskomponente der Segmente aushalten;
wobei die unteren Federn so ausgewählt sind, daß die unteren Dichtungssegmente ihr Gewicht und Feder- und Reibungskräfte überwinden, sodaß sich die Ringsegmente in in ihre Stellung mit kleinem Spielraum verschieben, damit bei stärkeren Strömungen und höheren Druckbedingungen die vorhergesagten Flüssigkeitsdruckverteilungsbedingungen an den Ringsegmenten vorliegen.

2. Dichtungsanordnung für Flüssigkeitsturbinen nach Anspruch 1, worin die Federmittel (16) Blattfedern umfassen.

3. Dichtungsanordnung für Flüssigkeitsturbinen nach Anspruch 1, dadurch gekennzeichnet, daß der innere gewölbte Abschnitt des Dichtungsringsegmentes einen inneren Ringabschnitt (100) umfaßt, der an einer Seite mit dem Halsabschnitt (13c) verbunden ist, und eine radial nach außen weisende gewölbte Oberfläche (20a) zur Begrenzung der Stellung mit großem Spielraum durch Berührung mit der Gehäuseoberiläche (21a) aufweist, wobei der innere Ringabschnitt mit Dichtungszähnen versehen ist, die von ihm weg verlaufen.

4. Dichtungsanordnung für Flüssigkeitsturbinen nach Anspruch 3, dadurch gekennzeichnet, daß der innere Ringabschnitt im wesentlichen axial vom Halsabschnitt aus in beide Richtungen verläuft, sodaß der innere Ringabschnitt im wesentlichen breiter ist als der Halsabschnitt und er mit Dichtungszähnen versehen ist, die von ihm aus radial in den Spielraumbereich verlaufen.

5. Dichtungsanordnung für Flüssigkeitsturbinen nach Anspruch 4, dadurch gekennzeichnet, daß die radial nach außen weisende gewölbte Oberfläche des Dichtungsringsegmentes, die gegenüber einer radial nach innen gerichteten gewölbten Oberfläche des Gehäuses angeordnet ist, die radial nach außen weisenden Oberflächen des inneren Ringabschnittes umfaßt.

## Revendications

1. Turbine à fluide élastique utilisant des garnitures d'étanchéité pour réduire les fuites entre pièces en rotation et pièces immobiles, comprenant :
- une bague d'étanchéité (13) en plusieurs segments, supportée par et au moins partiellement contenue dans un sillon annulaire (15) usiné dans un carter immobile (12) pour permettre le déplacement de ladite bague d'étanchéité entre une position de grand diamètre et une position de petit diamètre, correspondant respectivement à un grand débattement et à un plus petit débattement de ladite bague par rapport à l'arbre tournant (11), ledit sillon de la bague d'étanchéité étant partiellement délimité par des moyens annulaires formant butée (17) au niveau de l'ouverture annulaire dudit sillon, débouchant radialement dans la zone de débattement entre ledit carter et ledit arbre tournant ;
- chaque segment de ladite bague d'étanchéité (13) comportant une partie interne, en arc concave, (100) pourvue de dents d'étanchéité (14) saillantes vers et au voisinage de l'arbre tournant (11), une surface externe (20a), en arc convexe, du segment de la bague d'étanchéité qui est placée en regard d'une surface interne, en arc concave, (21a) du carter, et une partie externe de la bague (13a) disposée à l'intérieur du sillon annulaire d'étanchéité (15) pour y effectuer des mouvements axiaux et radiaux et pourvue d'épaulements (102) pour assurer un contact radial avec les moyens annulaires formant butée (17) sur le carter et limitant de ce fait la position de faible débattement, et
- des moyens de positionnement radial, comprenant des moyens à ressorts en compression (16) portant contre les segments de la bague (13), pour pousser lesdits segments vers la position de plus grand débattement, tandis que le fluide moteur qui est admis librement dans l'espace annulaire entre le carter et les segments de la bague poussera lesdits segments vers la position de plus faible débattement, grâce à quoi à faible vitesse et faible charge de la turbine, les forces des ressorts prédomineront, tandis qu'à fort débit et haute pression du fluide moteur les forces de pression prédomineront;
dans laquelle turbine :
a) la partie externe (13a) de chaque segment de la bague, a une paire d'épaulements annulaires (102) saillant de part et d'autre;
b) le carter, a une paire d'épaulements annulaires (12a) définissant l'ouverture du sillon annulaire (15) et constituant les moyens formant butée (17), chaque épaulement de la partie externe de la bague entrant en contact dans la position de débattement la plus faible avec l'épaulement annulaire respectif du carter;
c) un contact entre la surface externe en arc convexe (20a) de la bague d'étanchéité (13) en regard de la surface interne en arc concave (21a) du carter, définit la position de débattement la plus grande;
d) la bague d'étanchéité (13), a une partie rétrécie en col (13c), saillant de la partie interne en arc (100) et s'étendant avec un jeu à l'intérieur de l'entrée dans le sillon annulaire (15), et
e) un côté de la partie en col (13c) de la bague d'étanchéité (13) est conçu pour assurer un contact avec une surface annulaire radiale (103) sur l'un des épaulements annulaires (12a) du carter, pour assurer une étanchéité par pression de contact au niveau du côté de la turbine sous basse pression;
caractérisés en ce que ces moyens à ressorts (16) incluent des ressorts comprimés (16) interposés entre les extrémités desdits segments (13) pour pousser ceux-ci vers la position de plus grand débattement, grâce à quoi à faible vitesse et faible charge de la turbine chacun desdits ressorts est sélectionné pour promouvoir une force dépendant de sa position sur la circonférence du segment;
un segment (13) incluant à la fois des segments placés autour de la partie la plus haute entourant la moitié supérieure de l'arbre tournant (11) et des segments placés autour de la partie la plus basse de la moitié inférieure dudit arbre;
un carter immobile (12) présentant des moitiés supérieure et inférieure séparées horizontalement par des joints de carter (27), des moyens de verrouillage (26) s'étendant en dehors des joints de carter pour retenir ces ressorts en position entre ces carters et ces segments pour déterminer leur meilleur emplacement et positionnement respectifs;
ces ressorts (16) placés aux positions (28, 29, 30) audessus des joints de carter horizontaux (27) (ressorts supérieurs) assurant l'application d'une force entre les extrémités des segments voisins favorisant une poussée sur les parties hautes desdits segments vers la position de plus grand débattement tout en soutenant le poids de ceux-ci et résistant à une force prédominante de pression du fluide sur eux à faible vitesse et faible charge de la turbine;
lesdits ressorts supérieurs étant sélectionnés de telle manière qu'ils surmontent les forces de réaction et de friction telles que celles opposées par les segments, lesquels se déplacent transversalement et intérieurement vers leur plus petite force de débattement pour permettre aux conditions de distribution de la pression de fluide de s'exprimer sur lesdits segments sous les effets grandissants du flux et de la pression de fonctionnement du fluide;
et les ressorts (16) placés en positions (31, 32, 33) sous les joints de carter (27) (ressorts inférieurs) autorisant les forces du ressort à exercer une poussée sur ces segments vers une position de grand débattement en dépit de la résistance opposée par une quantité déterminée de forces de pression de fluide sur les segments les plus bas diminuée de leur composante poids à faible vitesse et charge de turbine;
les ressorts inférieurs choisis de telle manière que les segments inférieurs surmonteront leur poids et les forces de réaction et de friction des ressorts autorisant ces derniers à se déplacer diamétralement vers l'intérieur vers leur plus petite position de débattement permettant aux conditions prévues de distribution du fluide de pression de s'exercer sur lesdits segments quand prévalent de plus grands débits et des hautes pressions.

2. Dispositif d'étanchéité de turbine à fluide selon la revendication 1, dans lequel les moyens à ressorts (16) comprennent des ressorts d'écartement.

3. Dispositif d'étanchéité de turbine à fluide selon la revendication 1, caractérisé en ce que la partie intérieure en arc concave du segment de bague d'étanchéité comprend une partie intérieure de bague (100) reliée d'un côté à la partie en col (13c) et comporte ladite surface en arc convexe en regard s'étendant radialement (20a) pour limiter la position de plus grand débattement, par contact avec la surface du carter (21a), cette partie interne de la bague étant pourvue de dents d'étanchéité saillantes.

4. Dispositif d'étanchéité de turbine à fluide selon la revendication 3, caractérisé en ce que la partie intérieure en arc concave s'étend notablement de part et d'autre de la partie en col, de telle façon que ladite partie interne soit notablement plus large que ladite partie en col, et est pourvue de dents d'étanchéité saillantes dans la direction radiale à l'intérieur de la zone de débattement.

5. Dispositif d'étanchéité de turbine à fluide selon la revendication 4, caractérisé en ce que la surface en arc, faisant face vers l'extérieur dans la direction radiale en regard du segment de la bague d'étanchéité qui est située à l'opposé d'une surface en arc, faisant face vers l'intérieur dans la direction radiale dudit carter, comporte les surfaces, faisant face vers l'extérieur dans la direction radiale, de la partie intérieure de la bague.
